(19) **Europäisches Patentamt European Patent Office Office européen des brevets**

(11) **EP 3 012 287 B1**

(12) **EUROPEAN PATENT SPECIFICATION**

(45) Date of publication and mention
of the grant of the patent:
**07.08.2019 Bulletin 2019/32**

(51) Int Cl.:
***C08J 9/18*** (2006.01)

(21) Application number: **14813497.6**

(86) International application number:
**PCT/JP2014/065982**

(22) Date of filing: **17.06.2014**

(87) International publication number:
**WO 2014/203876 (24.12.2014 Gazette 2014/52)**

(54) **POLYPROPYLENE RESIN FOAMED PARTICLES HAVING EXCELLENT FLAME RESISTANCE AND CONDUCTIVITY AND POLYPROPYLENE RESIN-TYPE IN-MOLD FOAM MOLDED BODY**

POLYPROPYLENHARZ-SCHAUMPARTIKEL MIT HERVORRAGENDER FLAMMFESTIGKEIT UND LEITFÄHIGKEIT SOWIE IN EINER FORM GESCHÄUMTER POLYPROPYLENHARZ-FORMKÖRPER

PARTICULES EXPANSÉES DE RÉSINE DE POLYPROPYLÈNE AYANT UNE EXCELLENTE RÉSISTANCE À LA FLAMME ET UNE EXCELLENTE CONDUCTIVITÉ, ET CORPS MOULÉ PAR MOULAGE DE MOUSSE DANS LE MOULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2013 JP 2013130769**

(43) Date of publication of application:
**27.04.2016 Bulletin 2016/17**

(73) Proprietor: **Kaneka Corporation Osaka-shi, Osaka 530-8288 (JP)**

(72) Inventor: **MIURA Shintaro Settsu-shi Osaka 566-0072 (JP)**

(74) Representative: **Vossius & Partner Patentanwälte Rechtsanwälte mbB Siebertstrasse 3 81675 München (DE)**

(56) References cited:
**WO-A1-2013/022049      WO-A1-2013/094529
JP-A- 2004 175 819      JP-A- 2005 256 007
JP-A- 2005 264 005      JP-A- 2009 084 474
JP-A- 2009 203 256      JP-A- 2013 117 037**

**Description**

Technical Field

The present invention relates to polypropylene resin foamed particles and a polypropylene resin in-mold foam molded article used for cushioning packaging materials, radio wave absorbers, and other purposes.

Background Art

Polypropylene resin in-mold foam molded articles produced by using polypropylene resin foamed particles have shape arbitrariness, cushioning properties, lightweight properties, heat-insulating properties, and other properties, which are advantages of the in-mold foam molded articles. The polypropylene resin in-mold foam molded articles have better chemical resistance, heat resistance, and strain recovery after compression than those of in-mold foam molded articles produced by using polystyrene resin foamed particles, and have better dimensional accuracy, heat resistance, and compressive strength than those of in-mold foam molded articles produced by using polyethylene resin foamed particles. Due to these features, the polypropylene resin in-mold foam molded articles produced by using polypropylene resin foamed particles are used for cushioning materials, returnable boxes, heat insulating materials, automobile members, and various purposes.

The polypropylene resin in-mold foam molded articles are also used as cushioning materials for electronic devices and precision apparatuses, a parts tray of a robotized line, and radio wave absorbers used for suppressing radiation noises or radio reflection of anechoic chambers and electronic devices, for example. The electroconductive polypropylene resin in-mold foam molded articles used in such a case contain 10% by weight or more of electroconductive carbon black (for example, Patent Documents 1 to 6).

When containing 10% by weight or more of electroconductive carbon black, the polypropylene resin in-mold foam molded article unfortunately has lower flame retardancy. When applied to members requiring flame retardancy, such an in-mold foam molded article needs to contain a large amount of a flame retardant.

The reduction in flame retardancy of electroconductive polypropylene resin in-mold foam molded articles is not marked when polypropylene resin foamed particles are produced with an organic foaming agent such as butane as the foaming agent, but the reduction is marked when an inorganic foaming agent such as carbon dioxide is used. However, Patent Documents 1 to 6 do not clearly indicate such a disadvantage of the reduction in flame retardancy of electroconductive polypropylene resin in-mold foam molded articles, particularly the disadvantage of a marked reduction in flame retardancy when an inorganic foaming agent is used.

Carbon black includes carbon black for coloring in addition to the electroconductive carbon black, and the carbon black is typically used for coloring polypropylene resin in-mold foam molded articles. It is known that the flame retardancy of polypropylene resin in-mold foam molded articles is deteriorated when carbon black for coloring is used (for example, Patent Documents 7 to 9).

The flame retardancy of black-colored, polypropylene resin in-mold foam molded articles with carbon black is improved as follows: in Patent Document 7, a nitrogen-containing flame retardant (hindered amine flame retardant) is added to improve the flame retardancy; in Patent Document 8, an aggregate of carbon black agglomerate having a particular average area is used to improve the flame retardancy; and in Patent Document 9, a particular polyhydric alcohol is added to improve the flame retardancy.

The carbon black for coloring is added in a sufficient amount of 10% by weight or less in practice to color an in-mold foam molded article black although some of Patent Documents above describe an amount of 10% by weight or more. In examples in the Patent Documents above, carbon black for coloring is added in a small amount of less than 5% by weight, and the improvement of flame retardancy is not shown when the amount is 10% by weight or more, which is the amount of electroconductive carbon black typically added.

Patent Document 8 describes that hydrophilic polymers and polyhydric alcohols such as polyethylene glycol and glycerin can be used in order to improve the expansion ratio, but does not suggest that such a compound affects the flame retardancy. In addition, it does not describe that the disadvantage of the reduction in flame retardancy is marked when 10% by weight or more of carbon black is added or an inorganic foaming agent is used.

Patent Document 9 describes that the flame retardancy can be improved by the addition of a particular polyhydric alcohol when 10% by weight or less of carbon black for coloring is added, but indicates that the flame retardancy cannot be improved only by the addition of a particular polyhydric alcohol when carbon black for coloring is added in an amount of more than 10% by weight, for example, 15% by weight, as described in Comparative Examples.

The electroconductive carbon black and the carbon black for coloring, which are added to resins, are typically different in dibutyl phthalate (DBP) absorption amount. Carbon blacks having a DBP absorption amount of about 200 $cm^3$/100 g or more have excellent electric conductivity and thus are used as the electroconductive carbon black, whereas carbon blacks having a DBP absorption amount of less than 200 $cm^3$/100 g have excellent black coloring properties and thus are used as the carbon black for coloring.

It is not impossible that the carbon black for coloring is used to impart electric conductivity. However, in order to give excellent electric conductivity (for example, a volume resistivity value of 5,000Ω•m or less), the carbon black for coloring needs to be added in a larger amount than that of the electroconductive carbon black. This makes foam molding difficult, for example, and thus is impractical.

In order to provide a molded article of inorganic substance-containing polypropylene resin foamed particles that has added values such as high electric conductivity due to a large amount of an inorganic substance and also has good punching processability, Patent Document 10 describes a molded article of inorganic substance-containing polypropylene resin foamed particles. The molded article includes a polypropylene resin composition, as a base material, containing 57 to 92% by weight of a polypropylene resin, 3 to 30% by weight of an ethylene-α-olefin copolymer rubber, and 5 to 40% by weight of an inorganic substance. Patent Document 10 describes that when electric conductivity is imparted, 10% by weight or more of electroconductive carbon can be added to foamed particles, thereby expressing excellent electric conductivity. Comparative Example 2 describes foamed particles and a foam molded article containing 14% by weight of ketjen black (manufactured by Ketjen Black International Co.; Ketjen Black EC, a BET specific surface area of 800 m$^2$/g) as the electric conductive carbon.

However, when a flame retardant is added to the polypropylene resin containing a large amount of electroconductive carbon black, the resulting foamed particles are likely to have a higher open-cell ratio, and the resulting molded article has poor surface nature, lower dimensional accuracy, or lower compressive strength, unfortunately. In the present invention, the "open-cell ratio" is the ratio of open cells relative to the whole cells in foamed particles. The "dimensional accuracy" is the dimensional shrinkage ratio of an in-mold foam molded article with respect to a mold dimension, and a product having a smaller shrinkage ratio is considered to have a higher dimensional accuracy.

Patent Document 11 discloses an electroconductive polyolefin-based foam having excellent flame retardancy. The foam includes electroconductive carbon black, which has a DBP absorption of 365 cm$^3$/100g or 495 cm$^3$/100g in an amount from 5 to 25 parts by weight, melamine cyanurate in an amount from 2 to 30 parts by weight together with an olefin-based resin, which can be polypropylene or ethylene-propylene copolymer.

As described above, conventional techniques are insufficient to further impart excellent flame retardancy to polypropylene resin in-mold foam molded articles that contain a large amount of electroconductive carbon black in order to achieve excellent electric conductivity, and there is a demand for improvement.

Citation List

Patent Literatures

Patent Document 1: JP-A No. H07-300536
Patent Document 2: JP-A No. H09-202837
Patent Document 3: JP-A No. 2000-169619
Patent Document 4: JP-A No. 2004-175819
Patent Document 5: JP-A No. 2003-229691
Patent Document 6: JP-A No. 2004-319603
Patent Document 7: JP-A No. 2004-263033
Patent Document 8: JP-A No. 2010-209145
Patent Document 9: JP-A No. 2010-270243
Patent Document 10: JP-A No. H10-251436
Patent Document 11: JP2005264005 A

Summary of Invention

Technical Problem

An object of the present invention is to provide a polypropylene resin in-mold foam molded article having excellent electric conductivity and also having excellent flame retardancy, surface nature, and dimensional accuracy without increasing the open-cell ratio. Another object of the present invention is to provide polypropylene resin foamed particles constituting the polypropylene resin in-mold foam molded article. In particular, the present invention aims to enable the achievement of excellent flame retardancy in a polypropylene resin in-mold foam molded article produced from polypropylene resin foamed particles containing an inorganic foaming agent and conventionally having low flame retardancy.

Solution to Problem

As a result of intensive studies to solve the problem, the inventors of the present invention have found that in a polypropylene resin in-mold foam molded article containing an electroconductive carbon black having a particular dibutyl phthalate absorption amount (hereinafter also called "DBP absorption amount") and exhibiting excellent electric conductivity, the flame retardancy is improved by adding a predetermined amount of melamine cyanurate while the increase in open-cell ratio is suppressed.

In other words, the present invention includes the following aspects.

[1] Polypropylene resin foamed particles produced by a method comprising a one-step foaming process including placing polypropylene resin particles, water, and a foaming agent in a pressure-resistant container, the foaming agent including an inorganic physical foaming agent including carbon dioxide, dispersing the contents in the pressure-resistant container under stirring and increasing the temperature of the contents to a temperature equal to or higher than the temperature 20 °C lower than a melting point of the polypropylene resin particles and equal to or lower than the temperature 10°C higher than the melting point of the polypropylene resin particles, and then discharging the dispersion liquid in the pressure-resistant container into an area having a pressure lower than an internal pressure of the pressure-resistant container to foam the polypropylene resin particles, wherein the melting point of the polypropylene resin is a value determined through calorimetric measurement by differential scanning calorimetry as disclosed below in the description, the polypropylene resin particles including a polypropylene resin composition containing 11 parts by weight or more and 25 parts by weight or less of an electroconductive carbon black having a DBP absorption amount of 300 cm$^3$/100 g or more and 600 cm$^3$/100 g or less and 3 parts by weight or more and 15 parts by weight or less of melamine cyanurate, and 0.01 parts by weight or more and 10 parts by weight or less of a bubble size enlarging agent, respectively relative to 100 parts by weight of the polypropylene resin, wherein the bubble size enlarging agent is a compound that is present as a liquid at 150°C under normal pressure and has a hydroxy group and is contained in the polypropylene resin in a liquid state at a foaming temperature, wherein the DBP absorption amount is a value determined in accordance with JIS K6217-4:2008.

[2]
The polypropylene resin foamed particles according to the aspect [1]
, in which the bubble size enlarging agent is polyethylene glycol.

[3]
The polypropylene resin foamed particles according to any one of the aspects [1] to [2]
, in which the foamed particles have an average bubble size of 0.05 mm or more and less than 0.17 mm.

[4]
The polypropylene resin foamed particles according to any one of the aspects [1] to [3]
, in which the foamed particles have a bulk density of 2C g/L or more and 40 g/L or less.

[5]
The polypropylene resin foamed particles according to any one of the aspects [1] to [4]
, in which the foamed particles have an open-cell ratio of 3.0% or less.

[6]
The polypropylene resin foamed particles according to any one of the aspects [1] to [5],
in which the foamed particles have two melting peaks
in measurement by differential scanning calorimetry, and a ratio of the melting peak at a high temperature side, $\{Qh/(Ql + Qh)\} \times 100$, calculated from a heat quantity Ql of the melting peak at a low temperature side and a heat quantity Qh of the melting peak at the high temperature side is 6% or more and 20% or less.

[7]
A polypropylene resin in-mold foam molded article produced from the polypropylene resin foamed particles according to any one of the aspects [1] to [6],
the polypropylene resin in-mold foam molded article having a volume resistivity value of 10Ω·cm or more and 5,000Ω·cm or less.

[8]
The polypropylene resin in-mold foam molded article according to the aspect [7]
, in which the molded article passes UL94 HBF
flammability test.

[9]
The polypropylene resin in-mold foam molded article according to the aspect [7] or [8],
in which the molded article has a molded article density of 20 g/L or more and 40 g/L or less.

[10]
The polypropylene resin in-mold foam molded article according to any one of the aspects [7] to [9]

, in which the molded article has two melting peaks in measurement by differential scanning calorimetry, and a ratio of the melting peak at a high temperature side, $\{qh/(ql + qh)\} \times 100$, calculated from a heat quantity ql of the melting peak at a low temperature side and a heat quantity qh of the melting peak at the high temperature side is 6% or more and 20% or less.

[11]
A method for producing polypropylene resin foamed particles, the method including a one-step foaming process, the one-step foaming process including placing polypropylene resin particles, water, and a foaming agent in a pressure-resistant container, the foaming agent including an inorganic physical foaming agent including carbon dioxide, dispersing the contents in the pressure-resistant container under stirring and increasing the temperature of the contents to a temperature equal to or higher than the temperature 20 °C lower than a melting point of the polypropylene resin particles and equal to or lower than the temperature 10 °C higher than the melting point of the polypropylene resin particles, and then discharging the dispersion liquid in the pressure-resistant container into an area having a pressure lower than an internal pressure of the pressure-resistant container to foam the polypropylene resin particles, wherein the melting point of the polypropylene resin is a value determined through calorimetric measurement by differential scanning calorimetry as disclosed below,
the polypropylene resin particles including
a polypropylene resin
composition that contains 11 parts by weight or more and 25 parts by weight or less of an electroconductive carbon black having a DBP absorption amount of 300 cm$^3$/100 g or more and 600 cm$^3$/100 g or less and 3 parts by weight or more and 15 parts by weight or less of melamine cyanurate and 0.01 parts by weight or more and 10 parts by weight or less of a bubble size enlarging agent, respectively relative to 100 parts by weight of the polypropylene resin, wherein the bubble size enlarging agent is a compound that is present as a liquid at 150°C under normal pressure and has a hydroxy group and is contained in the polypropylene resin in a liquid state at a foaming temperature, wherein the DBP absorption amount is a value determined in accordance with JIS K6217-4:2008.
[12] The method for producing polypropylene resin foamed particles according to the aspect [11], in which the bubble size enlarging agent is polyethylene glycol.

Advantageous Effects of Invention

A polypropylene resin in-mold foam molded article produced by in-mold foam molding of polypropylene resin foamed particles pertaining to the present invention has excellent electric conductivity and also has excellent flame retardancy, surface nature, and dimensional accuracy. In other words, the present invention can advantageously provide polypropylene resin foamed particles and a polypropylene resin in-mold foam molded article having excellent electric conductivity, flame retardancy, surface nature, and dimensional accuracy.

Specifically in the present invention, a polypropylene resin in-mold foam molded article obtained even by using polypropylene resin foamed particles that are prepared by foaming with an inorganic foaming agent, which includes carbon dioxide, which has markedly reduced the flame retardancy, has excellent flame retardancy.

In the present invention, a polypropylene resin in-mold foam molded article having an excellent electric conductivity is produced by using an environment-friendly, halogen-free flame retardant that does not increase the open-cell ratio of foamed particles, and thus the present invention can advantageously suppress the reduction in surface nature or dimensional accuracy of the molded article and the increase in open-cell ratio, which leads to a reduction in strength, and improve the flame retardancy.

Brief Description of the Drawings

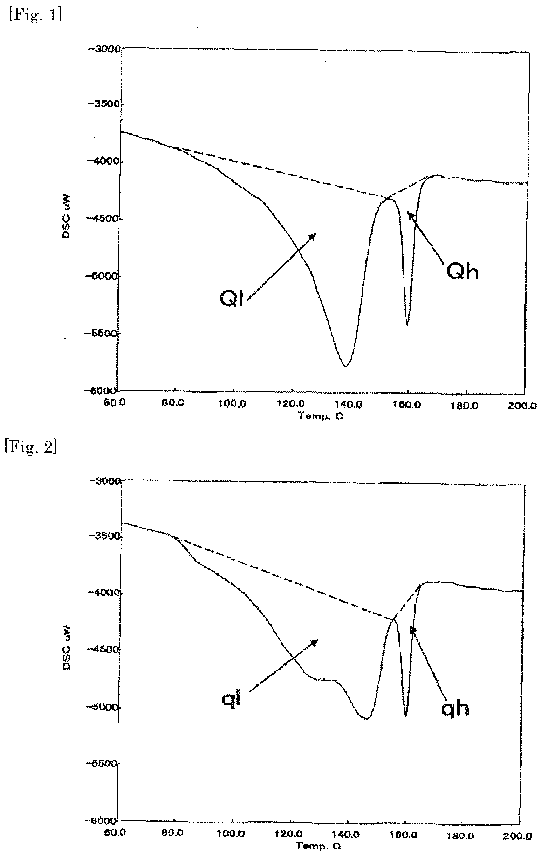

Fig. 1 is an example of a DSC curve obtained when polypropylene resin one-step foamed particles of the present invention are measured with a differential scanning calorimeter. The horizontal axis indicates temperature, and the vertical axis indicates endothermic quantity. The area surrounded by the low temperature peak and the broken line is Ql (heat quantity of the melting peak at the low temperature side), and the area surrounded by the high temperature peak and the broken line is Qh (heat quantity of the melting peak at the high temperature side).
Fig. 2 is an example of a DSC curve obtained when a polypropylene resin in-mold foam molded article of the present invention is measured with a differential scanning calorimeter. The horizontal axis indicates temperature, and the vertical axis indicates endothermic quantity. The area surrounded by the low temperature peak and the broken line is ql (heat quantity of the melting peak at the low temperature side), and the area surrounded by the high temperature peak and the broken line is qh (heat quantity of the melting peak at the high temperature side).

Description of Embodiments

The electroconductive carbon black used in the present invention has a dibutyl phthalate absorption amount (DBP absorption amount) of 300 $cm^3$/100 g or more and 600 $cm^3$/100 g or less, and more preferably, 350 $cm^3$/100 g or more and 500 $cm^3$/100 g or less. If having a DBP absorption amount of less than 300 $cm^3$/100 g, the electroconductive carbon black needs to be added in a large amount in order to impart excellent electric conductivity, and this may make it difficult to produce foamed particles. Even when foamed particles are produced, the polypropylene resin foamed particles are likely to have a smaller average bubble size, and the flame retardancy is likely to be markedly deteriorated. If the DBP absorption amount exceeds 600 $cm^3$/100 g, the electric conductivity or the flame retardancy is not improved, and much higher performances are not achieved.

Here, the DBP absorption amount is a value determined in accordance with JIS K6217-4: 2008.

Typical carbon blacks for coloring have a DBP absorption amount of less than 300 $cm^3$/100 g, and good electric conductivity and flame retardancy cannot be simultaneously satisfied.

In the present invention, any electroconductive carbon blacks having a DBP absorption amount of 300 $cm^3$/100 g or more and 600 $cm^3$/100 g or less can be used, and furnace black, channel black, acetylene black, and thermal black can be used, for example.

The electroconductive carbon black used in the present invention can have any BET specific surface area, but the BET specific surface area is preferably 600 $m^2$/g or more, and more preferably, 700 $m^2$/g or more from the viewpoint of achieving good electric conductivity. If the BET specific surface area is 600 $m^2$/g or more, the amount of the electroconductive carbon black for imparting excellent electric conductivity can be reduced, and the polypropylene resin foamed particles can be prevented from having a smaller average bubble size. As a result, an excellent flame retardancy can be readily achieved, and such a condition is preferred.

Here, the BET specific surface area is a value determined by the nitrogen adsorption method in accordance with JIS K6217-2: 2001.

Specific examples of the electroconductive carbon black used in the present invention include Ketjen Black EC300J (manufactured by Lion Corporation, a DBP absorption amount of 365 $cm^3$/100 g, a BET specific surface area of 800 $m^2$/g), Ketjen Black EC600JD (manufactured by Lion Corporation, a DBP absorption amount of 495 $cm^3$/100 g, a BET specific surface area of 1,270 $m^2$/g), ENSACO 350G (manufactured by Timcal, a DBP absorption amount of 320 $cm^3$/100 g, a BET specific surface area of 770 $m^2$/g), and Printex XE2 (manufactured by Degussa, a DBP absorption amount of 380 $cm^3$/100 g, a BET specific surface area of 950 $m^2$/g), in terms of trade name.

In the present invention, the amount of the electroconductive carbon black is 11 parts by weight or more and 25 parts by weight or less, more preferably, 13 parts by weight or more and 23 parts by weight or less, and even more preferably, 17 parts by weight or more and 22 parts by weight or less relative to 100 parts by weight of the polypropylene resin. If added in an amount of less than 11 parts by weight, the electroconductive carbon black can be unlikely to express good electric conductivity. If the amount is more than 25 parts by weight, the average bubble size becomes small, and good flame retardancy is unlikely to be achieved.

The polypropylene resin used in the present invention is not limited to particular resins and is exemplified by polypropylene homopolymers, ethylene/propylene random copolymers, butene-1/propylene random copolymers, ethylene/butene-1/propylene random copolymers, ethylene/propylene block copolymers, butene-1/propylene block copolymers, propylene-chlorinated vinyl copolymers, and propylene/maleic anhydride copolymers. Among them, ethylene/propylene random copolymers and ethylene/butene-1/propylene random copolymers are preferred due to good foamability and good moldability.

The ethylene content in the ethylene/propylene random copolymer or the ethylene/butene-1/propylene random copolymer is preferably 0.2% by weight or more and 10% by weight or less relative to 100% by weight of the corresponding copolymer.

The butene-1 content in the ethylene/butene-1/propylene random copolymer is preferably 0.2% by weight or more and 10% by weight or less relative to 100% by weight of the copolymer. The total content of ethylene and butene-1 is preferably 0.5% by weight or more and 10% by weight or less.

If the contents of ethylene and butene-1 in the respective copolymers are within the range, the foamability and the moldability can be improved while the reduction in mechanical properties is suppressed.

The melting point of the polypropylene resin is not limited to particular values and, for example, it is preferably 125°C or more and 150°C or less, and more preferably, 130°C or more and 145°C or less. If the polypropylene resin has a melting point of less than 125°C, the heat resistance is likely to be deteriorated, whereas if the polypropylene resin has a melting point of more than 150°C, it is likely to become difficult to improve the expansion ratio.

Here, the melting point of the polypropylene resin is a value determined through calorimetric measurement by differential scanning calorimetry (hereinafter also called "DSC method"). Specifically, 5 to 6 mg of the resin is melted by increasing the temperature at a temperature increase rate of 10°C/min from 40°C to 220°C, then the melted resin is crystallized by decreasing the temperature at a temperature decrease rate of 10°C/min from 220°C to 40°C, and the temperature is increased at a temperature increase rate of 10°C/min from 40°C to 220°C. On the DSC curve obtained, the melting peak temperature in the second temperature increase is regarded as the melting point.

The melt index (hereinafter also called "MI") of the polypropylene resin used in the present invention is not limited to particular values, but is preferably 3 g/10 min or more and 30 g/10 min or less, more preferably, 4 g/10 min or more and 20 g/10 min or less, and even more preferably, 5 g/10 min or more and 18 g/10 min or less.

If the polypropylene resin has an MI of less than 3 g/10 min, the resin composition after the addition of electroconductive carbon black has an excessively low MI, and thus it is likely to become difficult to improve the expansion ratio. If the polypropylene resin has an MI of more than 30 g/10 min, bubbles communicate in the resulting polypropylene resin foamed particles, and thus the polypropylene resin in-mold foam molded article is likely to have lower compressive strength or to have poor surface nature.

If the polypropylene resin has an MI of 3 g/10 min or more and 30 g/10 min or less, polypropylene resin foamed particles having a comparatively large expansion ratio are easily obtained. In addition, the polypropylene resin in-mold foam molded article obtained by in-mold foam molding of the polypropylene resin foamed particles has excellent surface appearance, a small dimensional shrinkage ratio, and excellent dimensional accuracy.

Here, the MI value is determined with an MI measurement apparatus described in JIS K7210: 1999 in conditions of an orifice size of $2.0959 \pm 0.005$ mm$\varphi$, an orifice length of $8.000 \pm 0.025$ mm, a load of 2,160 g, and a temperature of $230 \pm 0.2$°C.

The polymerization catalyst for monomers to synthesize the polypropylene resin used in the present invention can be a Ziegler catalyst or a metallocene catalyst, for example, but is not limited to them.

In the present invention, the addition of melamine cyanurate enables an improvement in flame retardancy without an increase in open-cell ratio.

In the present invention, the melamine cyanurate is contained in an amount of 3 parts by weight or more and 15 parts by weight or less, and more preferably, 4 parts by weight or more and 14 parts by weight or less relative to 100 parts by weight of the polypropylene resin. If contained in an amount of less than 3 parts by weight, the melamine cyanurate is likely to give a smaller effect of improving the flame retardancy. If contained in an amount of more than 15 parts by weight, the melamine cyanurate does not give an effect of improving the flame retardancy corresponding to the amount and unnecessarily increases the cost. In addition, the melamine cyanurate excessively increases the water content during foaming, thus cell walls are likely to be broken, and the open-cell ratio is likely to increase.

In the present invention, the addition of a bubble size enlarging agent to the polypropylene resin has a beneficial effect on an improvement in flame retardancy of the polypropylene resin in-mold foam molded article.

As a result of the studies to solve the problem of deterioration of the flame retardancy when 11 parts by weight or more and 25 parts by weight or less of an electroconductive carbon black is added in order to impart the electric conductivity to a polypropylene resin in-mold foam molded article, the inventors of the present invention have found that an increase in average bubble size of an in-mold foam molded article unexpectedly has a beneficial effect on the improvement of the flame retardancy. The inventors have then found that the addition of a bubble size enlarging agent is effective as the means. In particular, when an inorganic foaming agent is used as the foaming agent, the resulting in-mold foam molded article is likely to have a smaller average bubble size than that when an organic foaming agent is used, and thus the addition of a bubble size enlarging agent produces a marked effect.

A "bubble size enlarging agent" can be the compound (substance) defined as below.

In other words, a test substance A giving "$\alpha > \beta$" is defined as the "bubble size enlarging agent" where $\alpha$ is the average bubble size of electroconductive polypropylene resin foamed particles (one-step foamed particles described later) produced by foaming resin particles that are prepared from a polypropylene resin containing the test substance A together with electroconductive carbon black, and $\beta$ is the average bubble size of electroconductive polypropylene resin foamed particles (one-step foamed particles described later) produced by foaming in the same formulation and the same foaming conditions (foaming manner) as the above except that no test substance A is added. In the above definition, specific formulations and foaming conditions are as described below.

The "formulation" is as follows: To 100 parts by weight of a polypropylene resin, a certain amount of 0.1 parts by weight or more and 1 part by weight or less of a test substance A and 18 parts by weight of an electroconductive carbon black having a dibutyl phthalate absorption amount of 300 cm$^3$/100 g or more and 600 cm$^3$/100 g or less are added, thereby giving polypropylene resin particles that contain the test substance A and the electroconductive carbon black and have a single particle weight of about 1.8 mg.

The "foaming conditions (foaming manner)" mean the following conditions (manner). In other words, 100 parts by weight of the polypropylene resin particles obtained in accordance with the formulation, 170 parts by weight of water, 2.0 parts by weight of tribasic calcium phosphate as the inorganic dispersant described later, and 0.075 parts by weight of sodium alkylsulfonate as a dispersion assistant are placed in a pressure-resistant autoclave having a volume of 10 L, and 5.0 parts by weight of carbon dioxide as a foaming agent is added with stirring. Next, the contents in the autoclave are heated to a certain foaming temperature that is equal to or higher than the "temperature 5°C higher than a melting point" of the polypropylene resin and equal to or lower than the "temperature 10°C higher than the melting point", and then carbon dioxide (carbon dioxide gas) is added into the autoclave to adjust the autoclave internal pressure to 3.0 MPa (gauge pressure). The conditions are maintained for 30 minutes, and then a valve at a lower part of the autoclave is opened. Through a 4.0-mmφ open orifice, the contents in the autoclave are discharged into an atmosphere (1 atm), giving polypropylene resin foamed particles containing the test substance A and the electroconductive carbon black. At the time, carbon dioxide is injected under pressure from the upper part of the autoclave to apply back pressure so as to keep a constant foaming pressure. The average bubble size $\alpha$ of the polypropylene resin foamed particles containing the test substance A obtained in the foaming conditions is determined.

Separately, polypropylene resin foamed particles containing no test substance A are obtained in the same foaming conditions as the above except that no test substance A is added. The average bubble size $\beta$ of the obtained polypropylene resin foamed particles containing no test substance A is determined.

Any test substance A giving "$\alpha > \beta$" is defined as the "bubble size enlarging agent".

The test substance A is evaluated in a certain amount of 0.1 parts by weight or more and 1 part by weight or less, and a test substance A giving "$\alpha > \beta$" when evaluated at any amount within the range is defined as the bubble size enlarging agent in the present invention. For example, in some cases of the evaluation, a test substance A1 fails to give "$\alpha > \beta$" when added in an amount of 0.1 parts by weight, but gives "$\alpha > \beta$" when added in an amount of 0.5 parts by weight or of 1 part by weight.

In some cases of the evaluation, another test substance A2 cannot be evaluated when added in an amount of 1 part by weight because no polypropylene resin particles are obtained due to the excess amount of the substance, but can be evaluated to give "$\alpha > \beta$" when added in an amount of 0.5 parts by weight.

Here, the average bubble size of polypropylene resin foamed particles is determined by the following process.

First, substantially the center of a polypropylene resin foamed particle is cut with careful attention not to break bubble films (cell films) of the foamed particle, and the cut section is observed under a microscope [manufactured by Keyence Corporation: VHX digital microscope] (an observation photograph is taken). On the observation display or the observation photograph with the microscope, a line segment corresponding to a length of 1,000 pm is drawn except the surface layer part of the foamed particle. The number n of bubbles through which the line segment passes is counted, and then the bubble size (= 1,000/n ($\mu$m)) is calculated. The same operation is carried out with respect to ten foamed particles, and the average of the respective bubble sizes calculated is regarded as the average bubble size of the polypropylene resin foamed particles.

In the present invention the bubble enlarging agent is

compounds that are present as a liquid at 150°C under normal pressure (1 atm) and have a hydroxy group.

The foaming temperature when polypropylene resin foamed particles are produced is about 150°C, which varies, for example, with the melting point of a polypropylene resin to be used. The compound that is present as a liquid at 150°C under normal pressure, has a hydroxy group, and contained in a polypropylene resin is accordingly present in a liquid state at a foaming temperature, and consequently does not function as a foaming nucleating point. In addition, it is supposed that the compound, which has a hydroxy group, absorbs water used in a foaming process as described later, and the absorbed water vaporizes in a moment of foaming to enlarge the bubble size.

Specific examples of the bubble size enlarging agent used in the present invention include polyethylene glycol and glycerin. In addition, of glycerin fatty acid monoesters, glycerin fatty acid diesters, polyoxyethylene alkyl ethers, sorbitan fatty acid esters, polyoxyethylene monoesters, alkylalkanolamides, polyoxyethylene alkylamines, polyolefin-polyether block copolymers, and similar compounds, compounds (substances) having a melting point of less than 150°C and having a boiling point of more than 150°C also function as the bubble size enlarging agent in the present invention. Such a compound is specifically exemplified by glycerol monostearate and glycerol distearate. As the bubble size enlarging agent, a compound can be used singly or a plurality of compounds can be used in combination.

As the bubble size enlarging agent, among the exemplified compounds, polyethylene glycols are more preferred, and polyethylene glycols having an average molecular weight of 200 or more and 6,000 or less are even more preferred.

The bubble size enlarging agent used in the present invention is added in an amount of

0.01 parts by weight or more and 10 parts by weight or less, more preferably, 0.2 parts by weight or more and 5 parts by weight or less, and even more preferably, 0.3 parts by weight or more and 2 parts by weight or less relative to 100 parts by weight of the polypropylene resin.

If added in an amount of less than 0.01 parts by weight, the bubble size enlarging agent is likely to give a small effect on the enlargement of the average bubble size. If the bubble size enlarging agent is added in an amount of more than 10 parts by weight, the enlargement effect is not increased and much higher effect is unlikely to be achieved. The effective amount for enlarging the average bubble size varies with the type of the bubble size enlarging agent.

In the present invention, the polypropylene resin composition containing 11 parts by weight or more and 25 parts by weight or less of an electroconductive carbon black having a DBP absorption amount of 300 cm$^3$/100 g or more and 600 cm$^3$/100 g or less and 3 parts by weight or more and 15 parts by weight or less of melamine cyanurate and, as necessary, containing 0.01 parts by weight or more and 10 parts by weight or less of a bubble size enlarging agent relative to 100 parts by weight of the polypropylene resin is typically, previously melted and kneaded with an extruder, a kneader, a Banbury mixer, rolls, or other apparatuses and processed into a desired particle shape such as a column shape, an oval shape, a spherical shape, a cubic shape, and a rectangular parallelepiped shape, giving polypropylene resin particles so as to be easily used for foaming.

As for the size of the polypropylene resin particles used in the present invention, a single particle preferably has a weight of 0.1 mg to 30 mg, and more preferably, 0.3 mg to 10 mg. The weight of a single resin particle is an average resin particle weight calculated from 100 resin particles randomly selected and is indicated in terms of mg/particle.

At this time, materials are melted and kneaded, and thus the electroconductive carbon black, the melamine cyanurate, and the bubble size enlarging agent are substantially uniformly dispersed in resin particles. As a result, the outer layer and the core layer are not clearly separated in the resulting polypropylene resin foamed particles, and the electroconductive carbon black, the melamine cyanurate, and the bubble size enlarging agent are substantially uniformly dispersed in the entire foamed particles.

In the present invention, the polypropylene resin may further contain various additives such as antioxidants, light resistance improvers, antistatic agents, pigments, flame retardants, and bubble nucleating agents, as necessary, giving polypropylene resin particles. Such an additive is preferably added to a resin in a production process of the polypropylene resin particles as with the bubble size enlarging agent.

However, among these common additives, it is preferable that additives impairing the advantageous effects of the present invention, for example, additives impairing the enlargement of the bubble size (additives reducing the bubble size) be not used.

For example, bubble nucleating agents such as talc, kaolin, and zinc borate are typically likely to reduce the bubble size, and thus the type and the amount thereof need to be carefully selected so as not to reduce the bubble size when such an agent is added. In particular, talc has very strong effect of reducing the bubble size, and thus no talc is preferably added in the present invention.

A compound commonly known as the flame retardant but impairing the enlargement of the bubble size (reducing the bubble size) does not improve the flame retardancy but functions to deteriorate the flame retardancy, and thus it is preferable that such a compound be not used.

In the present invention, the addition of melamine cyanurate and the bubble size enlarging agent allows a polypropylene resin in-mold foam molded article to have higher flame retardancy, and thus when a flame retardant is added, the amount thereof can be reduced as compared with conventional amounts in some cases. The addition of a flame retardant in a smaller amount is therefore a preferred aspect in the polypropylene resin in-mold foam molded article pertaining to the present invention.

The polypropylene resin foamed particles pertaining to the present invention is produced by the production method shown below.

The polypropylene resin particles, water, and a foaming agent are placed in a pressure-resistant container. The contents in the container are dispersed under stirring, and the temperature of the contents in the pressure-resistant container is increased to a temperature equal to or higher than a softening point of the polypropylene resin particles. Next, the dispersion liquid in the pressure-resistant container is discharged into an area having a pressure lower than an internal pressure of the pressure-resistant container to foam the polypropylene resin particles (subjected to a foaming process), thereby producing the polypropylene resin foamed particles. The area having a pressure lower than an internal pressure of the pressure-resistant container preferably has atmospheric pressure (1 atm). Hereinafter, the above foaming process in which polypropylene resin particles are foamed is called one-step foaming process.

Here, when the temperature of contents in the pressure-resistant container is increased to a temperature equal to or higher than a softening point of the polypropylene resin particles, the temperature is equal to or higher than the "temperature 20°C lower than a melting point" of the polypropylene resin particles and equal to or lower than the "temperature 10°C higher than the melting point" of the polypropylene resin particles in order to achieve the foamability of the polypropylene resin particles.

The foaming agent used can be organic foaming agents such as propane, n-butane, isobutane, n-pentane, isopentane, hexane, cyclobutane, and cyclopentane and inorganic foaming agents such as carbon dioxide, water, air, and nitrogen. These foaming agents can be used singly or in combination of two or more of them.

Among these foaming agents, n-butane and isobutane are more preferred because the agents can increase the average bubble size and can improve the flame retardancy of the polypropylene resin in-mold foam molded article.

From the viewpoint that the advantageous effects are most markedly achieved, inorganic foaming agents such as carbon dioxide, water, air, and nitrogen are more preferred, and according to the present invention the foaming agent includes an inorganic physical foaming agent, which includes carbon dioxide.

Here, when containing the inorganic foaming agent, the polypropylene resin foamed particles are likely to have a smaller average bubble size. In particular, when containing 11 parts by weight or more and 25 parts by weight or less of an electroconductive carbon black, the foamed particles are likely to have a much smaller average bubble size, and this greatly deteriorates the flame retardancy of the polypropylene resin in-mold foam molded article unfortunately.

However, the combination use of the bubble size enlarging agent described above surprisingly enables an improvement of the flame retardancy without a flame retardant.

In the present invention, the amount of the foaming agent is not limited to particular values, and an appropriate amount can be used depending on a desired expansion ratio of the polypropylene resin foamed particles. Specifically, the amount of the foaming agent used is preferably 2 parts by weight or more and 60 parts by weight or less relative to 100 parts by weight of the polypropylene resin particles, for example.

When water is used as the foaming agent, the water used for dispersing the polypropylene resin particles in the pressure-resistant container can also be used as the foaming agent. In this case, by previously adding a hydrophilic compound or a water-absorbing compound to the polypropylene resin particles, the polypropylene resin particles easily absorb water in the pressure-resistant container, and this facilitates the use of water as the foaming agent.

The hydrophilic compound and the water-absorbing compound can be any types and can be used in any amounts. In the present invention, the above-mentioned bubble size enlarging agent is in liquid state at 150 °C and at 1 atm and contains a hydroxy group and has hydrophilic properties or water absorbability and can enlarge bubble sizes, and thus the bubble size enlarging agent is preferably also used as the hydrophilic compound or the water-absorbing compound.

When water is used as the foaming agent, the amount thereof used is preferably 50 parts by weight or more and 500 parts by weight or less, and more preferably, 100 parts by weight or more and 350 parts by weight or less relative to 100 parts by weight of the polypropylene resin particles. This enables the polypropylene resin particles and other materials to be dispersed in the pressure-resistant container and also enables water to be used as the foaming agent.

When a foaming agent containing carbon dioxide is used, the bubble size enlarging agent used is more preferably polyethylene glycol, glycerin, or a similar compound.

The pressure-resistant container used for producing the polypropylene resin foamed particles can be any containers that can withstand an internal pressure and an inner temperature of the container in the production method pertaining to the present invention. Specifically exemplified is an autoclave pressure-resistant container.

To produce the polypropylene resin foamed particles, an inorganic dispersant is more preferably used together with the polypropylene resin particles, water, and the foaming agent. Examples of the inorganic dispersant include tribasic calcium phosphate, tribasic magnesium phosphate, basic magnesium carbonate, calcium carbonate, basic zinc carbonate, aluminum oxide, iron oxide, titanium oxide, aluminosilicate, kaolin, and barium sulfate.

A dispersion assistant is preferably also used in combination in order to increase the dispersibility of the polypropylene resin particles in the pressure-resistant container. Examples of the dispersion assistant include sodium dodecylbenzenesulfonate, sodium alkanesulfonate, sodium alkylsulfonate, sodium alkyl diphenyl ether disulfonate, and sodium α-olefin sulfonate.

The amounts of the inorganic dispersant and the dispersion assistant can be set depending on the type thereof and the type and the amount of polypropylene resin particles used, and are not limited to particular values. Typically, the inorganic dispersant is preferably used in an amount of 0.2 parts by weight or more and 3 parts by weight or less and the dispersion assistant is preferably used in an amount of 0.001 parts by weight or more and 0.1 parts by weight or less relative to 100 parts by weight of water.

The polypropylene resin foamed particles pertaining to the present invention preferably have an average bubble size of 0.05 mm or more and less than 0.17 mm, and more preferably, 0.06 mm or more and 0.16 mm or less. If having an average bubble size of less than 0.05 mm, the polypropylene resin foamed particles are likely to have lower moldability. In the present invention in which melamine cyanurate, which also functions as a foam nucleating agent, is contained, it is practically difficult to obtain polypropylene resin foamed particles having an average bubble size of more than 0.17 mm.

The polypropylene resin foamed particles pertaining to the present invention preferably have a comparatively low bulk density of 20 g/L or more and 40 g/L or less. If having a bulk density of less than 20g/L, the polypropylene resin foamed particles cannot pass the standard for flame retardancy, UL94 HBF test, which is an advanced standard for flame retardancy, in some cases, whereas if having a bulk density of more than 40 g/L, the polypropylene resin foamed particles are naturally likely to express flame retardancy, and thus the advantageous effect by the present invention is likely to be reduced.

Polypropylene resin foamed particles having a comparatively low bulk density can be produced only through the one-step foaming process. When containing an inorganic foaming agent as the foaming agent, polypropylene resin foamed particles having a comparatively low bulk density cannot be produced only through the one-step foaming process in some cases. In such a case, by carrying out a two-step foaming process of further foaming the polypropylene resin foamed particles obtained through the one-step foaming process, or by carrying out a three-step foaming process of further foaming foamed particles after the two-step foaming process, polypropylene resin foamed particles having a comparatively low bulk density can be obtained.

The two-step foaming process (also the three-step foaming process) can be exemplified by the methods shown below.

For example, the polypropylene resin foamed particles obtained through the one-step foaming process are placed in a pressure-resistant closed container, and then an inorganic gas such as nitrogen, air, and carbon dioxide is injected under pressure into the container at 0.1 MPa or more and 0.6 MPa or less (gauge pressure). Next, the polypropylene resin foamed particles are pressurized and impregnated with the inorganic gas for 1 hour or more and 48 hours or less (pressurization treatment) to increase the pressure in the polypropylene resin foamed particles higher than normal pressure (1 atm), and then the polypropylene resin foamed particles are heated with water vapor at a pressure of 0.01 MPa or more and 0.4 MPa or less (gauge pressure) to be further foamed. This process can give polypropylene resin foamed particles having a lower bulk density (larger expansion ratio). By further foaming the polypropylene resin foamed particles obtained through the two-step foaming process in the same manner as in the two-step foaming process, polypropylene resin foamed particles having a much lower bulk density (much higher expansion ratio) can be obtained.

The polypropylene resin foamed particles obtained through the one-step foaming process are called one-step foamed particles, the polypropylene resin foamed particles obtained through the two-step foaming process are called two-step foamed particles, and the polypropylene resin foamed particles obtained through the three-step foaming process are called three-step foamed particles.

As described above, the polypropylene resin foamed particles pertaining to the present invention preferably have an average bubble size of 0.05 mm or more and less than 0.17 mm. Even when one-step foamed particles have an average bubble size of less than 0.05 mm, the two-step foaming process (or three-step foaming process) allows foamed particles to have a larger average bubble size, and thus polypropylene resin foamed particles having an average bubble size of 0.05 mm or more and less than 0.17 mm can be produced.

The polypropylene resin foamed particles pertaining to the present invention preferably have two melting peaks on the DSC curve obtained through calorimetric measurement by differential scanning calorimetry, and the ratio of the melting peak at the high temperature side "$\{Qh/(Ql + Qh)\} \times 100$" (hereinafter also called "DSC ratio") calculated from a heat quantity Ql of the melting peak at the low temperature side and a heat quantity Qh of the melting peak at the high temperature side is preferably 6% or more and 20% or less, and more preferably, 8% or more and less than 16%.

If the polypropylene resin foamed particles have a DSC ratio within the range, the bulk density is easily reduced, and a polypropylene resin in-mold foam molded article having excellent fusion properties and excellent surface appearance is readily obtained. If polypropylene resin foamed particles have a DSC ratio of less than 6%, bubbles in the polypropylene resin foamed particles are likely to communicate, and a molded article after in-mold foam molding is likely to be shrunk or to have a surface with wrinkles. If the DSC ratio exceeds 20%, the bulk density is unlikely to be reduced.

Here, as shown in Fig. 1, on the DSC curve that has two melting peaks and is obtained when the temperature of polypropylene resin foamed particles is increased from 40°C to 220°C at a rate of 10°C/min, Ql shows the heat quantity of the melting peak at the low temperature side, that is, the heat quantity surrounded by the DSC curve of the low temperature peak and a tangent line drawn from a maximum point between the low temperature peak and the high temperature peak to a melting start base line. Qh shows the heat quantity of the melting peak at the high temperature side, that is, the heat quantity surrounded by the DSC curve of the high temperature peak and a tangent line drawn from a maximum point between the low temperature peak and the high temperature peak to a melting end base line.

The heat quantity Qh of the melting peak at the high temperature side of the polypropylene resin foamed particles is not limited to particular values, but is preferably 2 J/g or more and 20 J/g or less, more preferably, 3 J/g or more and 15 J/g or less, and even more preferably, 4 J/g or more and 10 J/g or less. If the heat quantity Qh of the melting peak at the high temperature side of the polypropylene resin foamed particles is less than 2 J/g, bubbles in the polypropylene resin foamed particles are likely to communicate, and a molded article after in-mold foam molding is likely to be shrunk or to have a surface with wrinkles. If the heat quantity Qh of the melting peak at the high temperature side exceeds 20 J/g, the expansion ratio is unlikely to be increased.

The DSC ratio and the heat quantity of the melting peak at the high temperature side can be appropriately controlled, for example, by the holding time from the completion of temperature increase to the foaming in the one-step foaming process (holding time after the temperature substantially reaches a foaming temperature until foaming), the foaming temperature (temperature during foaming), and the foaming pressure (pressure during foaming). Generally, a longer holding time, a lower foaming temperature, or a lower foaming pressure is likely to lead to a larger DSC ratio or a larger heat quantity of the melting peak at the high temperature side.

From the above, a condition giving a desired DSC ratio and a desired heat quantity of the melting peak at the high temperature side can be easily found by repeating several experiments in which the holding time, the foaming temperature, and the foaming pressure are systematically and appropriately changed. The foaming pressure can be controlled by the amount of a foaming agent.

The polypropylene resin foamed particles pertaining to the present invention preferably have an open-cell ratio of 3.0% or less, and more preferably, 2.9% or less. If having an open-cell ratio of more than 3.0%, the polypropylene resin foamed particles are likely to cause a reduction in surface nature or dimensional accuracy of a molded article during in-mold foam molding and to cause a reduction in mechanical strengths such as compressive strength of the resulting in-mold foam molded article.

The open-cell ratio can be controlled by selecting an appropriate flame retardant for polypropylene resins having excellent electric conductivity. When a common flame retardant such as flame retardants containing a halogen such as bromine, phosphorus flame retardants, and inorganic flame retardants is used, the open-cell ratio is likely to increase. When melamine cyanurate of the present invention is used, the increase of the open-cell ratio can be suppressed although the mechanism is unclear.

The amount of the inorganic dispersant adhering to the surface of the polypropylene resin foamed particles pertaining to the present invention is preferably 2,000 ppm or less, more preferably, 1,300 ppm or less, and even more preferably, 800 ppm or less. If the amount of the inorganic dispersant adhering to the surface exceeds 2,000 ppm, the fusion properties during in-mold foam molding are likely to be reduced.

In the present invention, to make polypropylene resin foamed particles into an polypropylene resin in-mold foam molded article, conventionally known methods can be used. The method is exemplified by

A) a method of filling polypropylene resin foamed particles directly in a mold and carrying out in-mold foam molding,
B) a method of previously injecting an inorganic gas such as air into polypropylene resin foamed particles under pressure to impart an internal pressure (foamability), then filling the particles in a mold, and carrying out in-mold foam molding, and
C) a method of filling compressed polypropylene resin foamed particles in a mold and carrying out in-mold foam molding.

The method of producing a polypropylene resin in-mold foam molded article by using the polypropylene resin foamed particles pertaining to the present invention is specifically exemplified as follows: Polypropylene resin foamed particles are placed in a pressure-resistant container and then are previously pressurized by using an inorganic gas, thereby injecting the inorganic gas into the polypropylene resin foamed particles under pressure to impart an internal pressure (foamability). Next, the polypropylene resin foamed particles are filled in a molding space that is composed of two molds (a male die and a female die) and can be closed but cannot be tightly sealed, and are molded, for example, by using water vapor (heated water vapor) as the heating medium at a pressure of about 0.1 MPa or more and 0.4 MPa or less (gauge pressure) for a heating time of about 3 seconds or more and 30 seconds or less, and consequently the polypropylene resin foamed particles are foamed and fused with each other. The mold is then cooled, for example, with water to such a degree that deformation of the polypropylene resin in-mold foam molded article after release can be suppressed, and the molds are unclosed, giving the polypropylene resin in-mold foam molded article.

The internal pressure of the polypropylene resin foamed particles can be adjusted, for example, by applying a pressure of 0.1 MPa (gauge pressure) or more and 2.0 MPa (gauge pressure) or less with an inorganic gas such as air and nitrogen in a pressure-resistant container for a pressurizing time of 1 hour or more and 48 hours or less at a pressurizing temperature of room temperature (25°C) or more and 80°C or less.

The polypropylene resin in-mold foam molded article pertaining to the present invention preferably has a volume resistivity value of $10\Omega$•cm or more and $5,000\Omega$•cm or less, more preferably, $10\Omega$•cm or more and $3,000\Omega$•cm or less, and even more preferably, $10\Omega$•cm or more and $2,000\Omega$•cm or less. If having a volume resistivity value of more than $5,000\Omega$•cm, the polypropylene resin in-mold foam molded article is likely to have insufficient electric conductivity for applications as cushioning materials for electronic devices and precision apparatuses, a parts tray of a robotized line, and radio wave absorbers used for suppressing radiation noises or radio reflection of anechoic chambers and electronic devices. If containing the electroconductive carbon black of the present invention, the polypropylene resin in-mold foam molded article is difficult to have a volume resistivity value of less than $10\Omega$•cm.

The polypropylene resin in-mold foam molded article pertaining to the present invention preferably passes the standard for flame retardancy, UL94 HBF test.

The polypropylene resin in-mold foam molded article pertaining to the present invention preferably has a comparatively low molded article density of 20 g/L or more and 40 g/L or less, and more preferably, 25 g/L or more and 35 g/L or less. If having a molded article density of less than 20 g/L, the polypropylene resin in-mold foam molded article does not pass the standard for flame retardancy, UL94 HBF test, which is an advanced standard for flame retardancy, in some cases. If the molded article density exceeds 40 g/L, the flame retardancy is readily expressed, and thus the advantageous effect by the present invention is likely to be reduced.

On the DSC curve that has two melting peaks and is obtained through calorimetric measurement by differential scanning calorimetry of the polypropylene resin in-mold foam molded article pertaining to the present invention, the ratio of the melting peak at the high temperature side "$\{qh/(ql + qh)\} \times 100$" (hereinafter also called "DSC ratio") calculated from a heat quantity ql of the melting peak at the low temperature side and a heat quantity qh of the melting peak at the high temperature side is preferably 6% or more and 20% or less, and more preferably, 6% or more and less than 16%. If the polypropylene resin in-mold foam molded article has a DSC ratio within the range above, the polypropylene resin in-mold foam molded article having excellent fusion properties and excellent surface appearance is readily obtained. If the DSC ratio of a polypropylene resin in-mold foam molded article is less than 6%, bubbles in the polypropylene resin in-mold foam molded article are likely to communicate, whereas if the DSC ratio exceeds 20%, the fusion properties are likely to be deteriorated.

The polypropylene resin in-mold foam molded article having a DSC ratio within the range can be obtained by in-mold foam molding of polypropylene resin foamed particles having a DSC ratio of 6% or more and 20% or less.

Here, the DSC curve of a polypropylene resin in-mold foam molded article is affected by heat history during in-mold foam molding, and thus is not completely the same as the DSC curve of the corresponding polypropylene resin foamed particles. In particular, in the region of 100°C or more and 140°C or less of a low temperature peak (a melting peak at the low temperature side), shoulder peaks or small peaks can be observed in some cases. In the present invention, these shoulder peaks and small peaks are regarded as parts of the low temperature peak.

As shown in Fig. 2, the polypropylene resin in-mold foam molded article has two melting peaks on the DSC curve obtained when the temperature of the molded article is increased from 40°C to 220°C at a rate of 10°C/min, and ql shows the heat quantity of the melting peak at the low temperature side, that is, the heat quantity surrounded by the DSC curve of the low temperature peak and a tangent line drawn from a maximum point between the low temperature peak and the high temperature peak to a melting start base line. qh shows the heat quantity of the melting peak at the high temperature side, that is, the heat quantity surrounded by the DSC curve of the high temperature peak and a tangent line drawn from a maximum point between the low temperature peak and the high temperature peak to a melting end base line.

The heat quantity qh of the melting peak at the high temperature side of the polypropylene resin in-mold foam molded article is not limited to particular values, but is preferably 2 J/g or more and 20 J/g or less, more preferably, 3 J/g or more and 15 J/g or less, and even more preferably, 4 J/g or more and 10 J/g or less. If the heat quantity qh of the melting peak at the high temperature side of the polypropylene resin in-mold foam molded article is less than 2 J/g, the mechanical strength is likely to be reduced, whereas if the heat quantity qh of the melting peak at the high temperature side exceeds 20 J/g, the fusion properties are likely to be reduced.

Examples

The present invention will next be described in detail with reference to examples, but the present invention is not limited to them.

The following resins and additives were used in examples and comparative examples.

- Polypropylene resin:

  - F227A [manufactured by Prime Polymer Co., Ltd. (trial product): an ethylene-propylene random copolymer, a melting point of 141°C, a melt index of 7 g/10 min, an ethylene content of 3% by weight]

- Carbon black:

  - ENSACO 350G [manufactured by Timcal, a DBP absorption amount of 320 $cm^3$/100 g, a BET specific surface area of 770 $m^2$/g] (electroconductive carbon black)
  - Ketjen Black EC600D [manufactured by Lion Corporation, a DBP absorption amount of 495 $cm^3$/100 g, a BET specific surface area of 1,270 $m^2$/g] (electroconductive carbon black)
  - Carbon black for coloring [manufactured by Dainichiseika Color & Chemicals Mfg. Co., Ltd. (trial product): a DBP absorption amount of 140 $cm^3$/100 g, a BET specific surface area of 370 $m^2$/g, a structure average area of $12.9 \times 10^4$ $nm^2$]

- Triazine compound:

  - Melamine cyanurate [manufactured by Sakai Chemical Industry Co., Ltd., MC-5S]
  - Melamine [manufactured by Nissan Chemical Industries, Ltd.]

- Bubble size enlarging agent:

  - Polyethylene glycol [manufactured by Lion Corporation, PEG #300: an average molecular weight of 300, liquid at 150°C under normal pressure]

- Flame retardant:

  - Sterically hindered amine ether [manufactured by Ciba Specialty Chemicals: NOR116]
  - Aromatic condensed phosphate [manufactured by DAIHACHI Chemical Industry Co., Ltd.: PX200]

In examples and comparative examples, physical property measurements and evaluations were carried out by the following procedures.

[Measurement of melting point of polypropylene resin]

With a differential scanning calorimeter [manufactured by Seiko Instruments, model DSC6200], 5 to 6 mg of a polypropylene resin as a substrate resin was melted by increasing the temperature at a temperature increase rate of 10°C/min from 40°C to 220°C, then the melted resin was crystallized by decreasing the temperature at a temperature decrease rate of 10°C/min from 220°C to 40°C, and the temperature was increased at a temperature increase rate of 10°C/min from 40°C to 220°C. On the DSC curve obtained, the melting peak temperature in the second temperature increase was regarded as the melting point.

[Measurement of melt index (MI) of polypropylene resin]

The melt index of a polypropylene resin was determined with an MI measurement apparatus described in JIS K7210: 1999 in conditions of an orifice size of $2.0959 \pm 0.005$ mm$\varphi$, an orifice length of $8.000 \pm 0.025$ mm, a load of 2,160 g, and a temperature of $230 \pm 0.2$°C.

[Average bubble size of polypropylene resin foamed particles]

First, substantially the center of a polypropylene resin foamed particle was cut with careful attention not to break bubble films (cell films) of the foamed particle, and the cut section was observed under a microscope [manufactured by Keyence Corporation: VHX digital microscope] (an observation photograph was taken).
On the observation photograph with the microscope, a line segment corresponding to a length of 1,000 $\mu$m was drawn except the surface layer part of the foamed particle. The number n of bubbles through which the line segment passes was counted, and then the bubble size (= 1,000/n ($\mu$m)) was calculated. The same operation was carried out with respect to 10 foamed particles, and the average of the respective bubble sizes calculated was regarded as the average bubble size of the polypropylene resin foamed particles.

[Expansion ratio of polypropylene resin foamed particles]

The weight w (g) of polypropylene resin foamed particles was determined. The polypropylene resin foamed particles were then immersed in ethanol, and the increase in volume (ethanol submergence volume) v (cm$^3$) was determined. The expansion ratio was calculated in accordance with the following expression by using the density d (g/cm$^3$) of the polypropylene resin before foaming.

$$\text{Expansion ratio} = \text{d} \times \text{v/w}$$

The density d of a polypropylene resin before foaming strictly varies with the amounts and types of additives contained, but in the present invention, "d = 0.9 g/cm$^3$".

[Measurement of DSC ratio of polypropylene resin foamed particles]

From the DSC curve obtained when the temperature of 5 to 6 mg of polypropylene resin foamed particles was increased with a differential scanning calorimeter [manufactured by Seiko Instruments, model DSC6200] at a temperature increase rate of 10°C/min from 40°C to 220°C, the DSC ratio was calculated.
Specifically, based on the DSC curve having two melting peaks as shown in Fig. 1, the ratio of the melting peak at the high temperature side "{Qh/(Ql + Qh)} $\times$ 100" was calculated from the heat quantity Ql of the melting peak at the low temperature side, that is, the heat quantity surrounded by the DSC curve of the low temperature peak and a tangent line drawn from a maximum point between the low temperature peak and the high temperature peak to a melting start base line, and from the heat quantity Qh of the melting peak at the high temperature side, that is, the heat quantity surrounded by the DSC curve of the high temperature peak and a tangent line drawn from a maximum point between the low temperature peak and the high temperature peak to a melting end base line.

[Measurement of DSC ratio of polypropylene resin in-mold foam molded article]

From a polypropylene resin in-mold foam molded article, 5 to 6 mg of a sample was cut out. The ratio of the melting peak at the high temperature side "{qh/(ql + qh)} × 100" was then calculated in the same manner as in the measurement of DSC ratio of polypropylene resin foamed particles except the sample was used in place of the polypropylene resin foamed particles.

[Open-cell ratio of polypropylene resin foamed particles]

With an air pycnometer [manufactured by Beckmann, model 930], the true volume $V_0$ (cm$^3$) of pre-foamed particles was determined in accordance with PROCEDURE C in ASTM D2856-87. Separately, the ethanol submergence volume $V_1$ (cm$^3$) of the same sample was determined. The open-cell ratio was calculated in accordance with the following expression.

$$\text{Open-cell ratio } (\%) = \{(V_1 - V_0)/V_1\} \times 100$$

[Bulk density of polypropylene resin foamed particles]

Polypropylene resin foamed particles were slowly added and filled into a container having a volume of about 5 L, and the polypropylene resin foamed particles in the container were weighed. The weight was divided by the volume of the container, giving a bulk density (g/L).

[Molded article density of polypropylene resin in-mold foam molded article]

From substantially the center in the thickness direction of a polypropylene resin in-mold foam molded article with a length of about 300 mm, a width of about 400 mm, and a thickness of about 50 mm, five test pieces having a rectangular parallelepiped shape with a length of 150 mm, a width of 50 mm, and a thickness of 12 mm were cut out (without the skin layer) for UL94 HBF test. The weight, the length, the width, and the thickness of the cut out test piece were then measured. The product of the length, the width, and the thickness was calculated as the volume of the test piece, and the weight was divided by the volume. The average of five test pieces was regarded as the molded article density (g/L).

[Evaluation of fusion properties of polypropylene resin in-mold foam molded article]

A polypropylene resin in-mold foam molded article that had been molded to have a length of about 300 mm, a width of about 400 mm, and a thickness of about 50 mm was cut in the thickness direction with a cutter knife to make an incision with a size of about 3 mm, then the polypropylene resin in-mold foam molded article was broken from the incision by hand, and the broken-out section was observed.

The ratio of the number of broken polypropylene resin foamed particles relative to the number of polypropylene resin foamed particles included in the broken-out section was determined as a fusion ratio (%), and the fusion properties were evaluated on the basis of the following criteria. The evaluation results are indicated by "○" or "×".
○: The fusion ratio is 60% or more.
×: The fusion ratio is less than 60%.

[Evaluation of surface nature of polypropylene resin in-mold foam molded article]

The surface of a polypropylene resin in-mold foam molded article that had been molded to have a length of about 300 mm, a width of about 400 mm, and a thickness of about 50 mm was visually observed, and the surface nature was evaluated on the basis of the following criteria. The evaluation results are indicated by "○", "Δ", or "×".
○: The surface has almost no wrinkles, sink marks, or voids.
Δ: The surface has at least any of a few wrinkles, a few sink marks, and a few voids.
×: The surface has at least any of marked wrinkles, marked sink marks, and marked voids.

Here, the void means a clearance among foamed resin particles fused to each other on the surface of an in-mold foam molded article.

[Evaluation of dimensional accuracy of polypropylene resin in-mold foam molded article]

The dimension ($L_1$, unit: mm) in the longitudinal direction of a polypropylene resin in-mold foam molded article that had been molded to have a length of about 300 mm, a width of about 400 mm, and a thickness of about 50 mm was measured with a vernier calipers. The dimensional shrinkage ratio with respect to mold was calculated in accordance with the following expression, and the dimensional accuracy was evaluated on the basis of the following criteria. The evaluation results are indicated by "○" or "×".

Dimensional shrinkage ratio with respect to mold (%) = $\{(300 - L_1)/300\} \times 100$

○: The dimensional shrinkage ratio with respect to mold is less than 2.0%.

×: The dimensional shrinkage ratio with respect to mold is 2.0% or more.

[Evaluation of compressive strength of polypropylene resin in-mold foam molded article]

From substantially the center of a polypropylene resin in-mold foam molded article that had been molded to have a length of about 300 mm, a width of about 400 mm, and a thickness of about 50 mm, a test piece with a length of 50 mm, a width of 50 mm, and a thickness of 25 mm was cut out. With regard to the thickness direction, the molded article was cut off by about 12.5 mm from each surface, giving the test piece with a thickness of 25 mm.

The compressive stress at 50% compression of the obtained test piece was determined when the test piece was compressed at a speed of 10 mm/min in accordance with NDZ-Z0504 with a tension and compression testing machine [manufactured by Minebea Co., Ltd., TG series].

The compressive stress at 50% compression indicates the degree of rigidity of an in-mold foam molded article.

[Evaluation of electric conductivity of polypropylene resin in-mold foam molded article]

The volume resistivity of a polypropylene resin in-mold foam molded article was determined in accordance with JIS K7194-1994 by using a resistivity meter [manufactured by Mitsubishi Chemical Analytech Co., Ltd., "Loresta GP"], and the electric conductivity was evaluated on the basis of the following criteria. The evaluation results are indicated by "○", "Δ" or "×".

○: The volume resistivity is 2,000 Ω•cm or less.

Δ: The volume resistivity is more than 2,000Ω•cm and not more than 5,000Ω•cm.

×: The volume resistivity is more than 5,000Ω•cm.

[Evaluation of flame retardancy of polypropylene resin in-mold foam molded article]

From substantially the center in the thickness direction of a polypropylene resin in-mold foam molded article that had been molded to have a length of about 300 mm, a width of about 400 mm, and a thickness of about 50 mm, a test piece having a rectangular parallelepiped shape with a length of 150 mm, a width of 50 mm, and a thickness of 12 mm was cut out (without the skin layer) for the standard for flame retardancy, UL94 HBF test.

The obtained test piece was subjected to the standard for flame retardancy, UL94 HBF test, and the flame retardancy was evaluated on the basis of the following criteria. The evaluation results are indicated by "◎", "○", or "×".

◎: The advanced standard of HBF test is satisfied (the burning rate between 100-mm marked lines is less than 35 mm/min).

○: The standard of HBF test is satisfied (the burning rate between 100-mm marked lines is 35 mm/min or more and 40 mm/min or less or a burning distance is less than 125 mm).

×: The standard of HBF test is not satisfied.

Examples of the present invention will next be specifically described.

(Example 1)

[Production of polypropylene resin particles]

To 100 parts by weight of an ethylene-propylene random copolymer (a melting point of 141°C, a melt index of 7 g/10 min, an ethylene content of 3% by weight), 18 parts by weight of ENSACO 350G (manufactured by Timcal, a DBP absorption amount of 320 cm$^3$/100 g, a BET specific surface area of 770 m$^2$/g) as an electroconductive carbon black was added, and the whole was mixed with a Banbury mixer, giving a polypropylene resin composition.

Next, the polypropylene resin composition was placed in a 45-mmφ twin-screw extruder [manufactured by ON Machinery, TEK 45-mm extruder], and then melted and kneaded at a resin temperature of 220°C. During the melting and kneading in the twin-screw extruder, melamine cyanurate and polyethylene glycol as a bubble size enlarging agent were added so as to give an amount of 5 parts by weight and an amount of 0.5 parts by weight, respectively, relative to 100 parts by weight of the ethylene-propylene random copolymer.

The obtained, melted and kneaded resin was extruded into strands with a circular die, then cooled with water, and cut with a pelletizer. Consequently, polypropylene resin particles having a particle weight of about 1.8 mg were obtained.

[Production of polypropylene resin foamed particles]

In a pressure-resistant autoclave having a volume of 10 L, 100 parts by weight of the obtained polypropylene resin particles, 170 parts by weight of water, 2.0 parts by weight of tribasic calcium phosphate as an inorganic dispersant, and 0.075 parts by weight of sodium alkylsulfonate as a dispersion assistant were placed, and 5.0 parts by weight of carbon dioxide (carbon dioxide gas) as a foaming agent was added with stirring.

The contents in the autoclave were heated to a foaming temperature of 147°C, and carbon dioxide (carbon dioxide gas) was further added to adjust the autoclave internal pressure to 3.0 MPa (gauge pressure). The conditions were maintained for 30 minutes, and then a valve at a lower part of the autoclave was opened. Through a 3.6-mm$\varphi$ open orifice, the contents in the autoclave were discharged into an atmosphere, giving one-step foamed particles. At the time, carbon dioxide was injected under pressure from the upper part of the autoclave to apply back pressure so as to keep a constant foaming pressure.

The obtained one-step foamed particles had an average bubble size of 110 $\mu$m, an expansion ratio of 13, a DSC ratio of 12%, and an open-cell ratio of 1.5%.

An internal pressure of 0.26 MPa (absolute pressure) was applied into the obtained one-step foamed particles by air impregnation, and the particles were heated by water vapor at 0.07 MPa (gauge pressure), giving two-step foamed particles having an average bubble size of 140 $\mu$m, a bulk density of 31 g/L, a DSC ratio of 12%, and an open-cell ratio of 1.6%.

[Production of polypropylene resin in-mold foam molded article]

Next, with a polyolefin foam molding machine [manufactured by DAISEN Co., Ltd., KD-345], a mold having a box shape with a length of 300 mm, a width of 400 mm, and a thickness of 50 mm was filled with the two-step foamed particles (polypropylene resin foamed particles) that had been adjusted so as to have an internal air pressure (internal pressure of foamed particles) of 0.20 MPa (absolute pressure). The particles were heated and molded at a heated vapor pressure (vapor pressure) for molding of 0.30 MPa (gauge pressure) while compressed by 10% in the thickness direction, giving a polypropylene resin in-mold foam molded article.

The obtained polypropylene resin in-mold foam molded article was allowed to stand at room temperature (25°C) for 1 hour, and then was dried and aged for 3 hours in a thermostatic chamber at 75°C. The molded article was taken out of the thermostatic chamber, and then further allowed to stand at room temperature for 24 hours. The molded article density and the DSC ratio of the polypropylene resin in-mold foam molded article were determined, and the fusion properties, the surface nature, the dimensional accuracy, the compressive strength, the electric conductivity, and the flame retardancy were evaluated. Table 1 shows these measurement and evaluation results.

(Reference Example 2 and Examples 3 to 5 according to the invention)

[Production of polypropylene resin particles]

Polypropylene resin particles were obtained by carrying out the same operations as in Example 1 except that the types and the amounts of the electroconductive carbon black, the bubble size enlarging agent, and the melamine cyanurate were changed as described in Table 1.

[Production of polypropylene resin foamed particles]

One-step foamed particles and two-step foamed particles (polypropylene resin foamed particles) were obtained by carrying out the same operations as in Example 1 except that the foaming conditions (vapor pressure) for two-step foaming were changed to the conditions described in Table 1 in order to achieve an intended bulk density (about 30 g/L) of pre-foamed particles (two-step foamed particles) to be obtained. Table 1 shows the measurement results of the obtained one-step foamed particles and the two-step foamed particles.

[Production of polypropylene resin in-mold foam molded article]

Polypropylene resin in-mold foam molded articles were obtained from the obtained two-step foamed particles by carrying out the same operations as in Example 1. Table 1 shows the measurement and evaluation results of the obtained polypropylene resin in-mold foam molded articles.

(Comparative Examples 1 to 7)

[Production of polypropylene resin particles]

Polypropylene resin particles were obtained by carrying out the same operations as in Example 1 except that the types and the amounts of the electroconductive carbon black, the bubble size enlarging agent, the melamine cyanurate, and the flame retardant were changed as described in Table 1. The flame retardant was added when the polypropylene resin composition was produced.

[Production of polypropylene resin foamed particles]

One-step foamed particles and two-step foamed particles (polypropylene resin foamed particles) were obtained by carrying out the same operations as in Example 1 except that the foaming conditions (internal pressure of foamed particles and vapor pressure) for two-step foaming were changed to the conditions described in Table 1 in order to achieve an intended bulk density (about 30 g/L) of pre-foamed particles (two-step foamed particles) to be obtained. Table 1 shows the measurement results of the obtained one-step foamed particles and the two-step foamed particles.

[Production of polypropylene resin in-mold foam molded article]

Polypropylene resin in-mold foam molded articles were obtained from the obtained two-step foamed particles by carrying out the same operations as in Example 1.

Table 1 shows the measurement and evaluation results of the obtained polypropylene resin in-mold foam molded articles.

(Reference Example 1)

[Production of polypropylene resin particles]

Polypropylene resin particles were obtained by carrying out the same operations as in Example 1 except that no melamine cyanurate was added as described in Table 1.

[Production of polypropylene resin foamed particles]

One-step foamed particles and two-step foamed particles (polypropylene resin foamed particles) were obtained by carrying out the same operations as in Example 1 except that the foaming conditions were changed to the conditions described in Table 1. Table 1 shows the measurement results of the obtained one-step foamed particles and the two-step foamed particles.

[Production of polypropylene resin in-mold foam molded article]

A polypropylene resin in-mold foam molded article was obtained from the obtained two-step foamed particles by carrying out the same operations as in Example 1. Table 1 shows the measurement and evaluation results of the obtained polypropylene resin in-mold foam molded article.

[Table 1]

| | | | Example | | | | | Comparative Example | | | | | | | Reference Example |
|---|---|---|---|---|---|---|---|---|---|---|---|---|---|---|---|
| | | | 1 | 2 (*) | 3 | 4 | 5 | 1 | 2 | 3 | 4 | 5 | 6 | 7 | 1 |
| Ethylene propylene random copolymer | | parts by weight | 100 | 100 | 100 | 100 | 100 | 100 | 100 | 100 | 100 | 100 | 100 | 100 | 100 |
| Carbon black (with conductivity or for coloring) | ENSACO 350G | parts by weight | 18 | 18 | 18 | 23 | | 18 | 18 | 18 | 18 | 18 | 18 | | 18 |
| | Ketjen Black EC600JD | parts by weight | | | | | 18 | | | | | | | 18 | |
| | Carbon black for coloring | parts by weight | | | | | | | | | | | | | |
| Carbon black properties | (DBP absorption amount) | cm³/100g | 320 | 320 | 320 | 320 | 495 | 320 | 320 | 320 | 320 | 320 | 320 | 140 | 320 |
| | (BET specific surface area) | m²/g | 770 | 770 | 770 | 770 | 1270 | 770 | 770 | 770 | 770 | 770 | 770 | 370 | 770 |
| | (Structure average area) | nm² | | | | | | | | | | | | * | |
| Bubble size enlarging agent | Polyethylene glycol (average molecular weight: 300) | parts by weight | 0.5 | | 0.5 | 0.5 | 0.5 | | | | 0.5 | 0.5 | 0.5 | 0.5 | 0.5 |
| Triazine compound | Melamine cyanurate | parts by weight | 5 | 5 | 10 | 5 | 5 | | 2 | 17 | 5 | 5 | 5 | 5 | |
| | Melamine | parts by weight | | | | | | | | | | | | | |
| Flame retardant | Sterically hindered amine ether (Note 1) | parts by weight | | | | | | | | | | | | | |
| | Aromatic condensed phosphate (Note 2) | parts by weight | | | | | | | | | | | | | |
| Weight of polypropylene resin particle | | mg/particle | 1.8 | 1.8 | 1.8 | 1.8 | 1.8 | 1.8 | 1.8 | 1.8 | 1.8 | 1.8 | 1.8 | 1.8 | 1.8 |
| One-step foaming conditions | Amount of carbon dioxide | parts by weight | 5.0 | 5.0 | 5.0 | 5.0 | 5.0 | 5.0 | 5.0 | 5.0 | 5.0 | 5.0 | 5.0 | 5.0 | 5.0 |
| | Foaming temperature | °C | 147 | 147 | 147 | 147 | 147 | 147 | 147 | 147 | 147 | 147 | 147 | 147 | 147 |
| | Foaming pressure (gauge pressure) | MPa | 3.0 | 3.0 | 3.0 | 3.0 | 3.0 | 3.0 | 3.0 | 3.0 | 3.0 | 3.0 | 3.0 | 3.0 | 3.0 |
| One step foamed particles | Average bubble size | mm | 0.11 | 0.06 | 0.09 | 0.10 | 0.12 | 0.07 | 0.07 | 0.08 | 0.09 | 0.13 | 0.10 | 0.12 | 0.17 |
| | Expansion ratio | - | 13 | 11 | 14 | 13 | 14 | 10 | 10 | 13 | 16 | 13 | 10 | 12 | 13 |
| | DSC ratio | % | 12 | 12 | 12 | 13 | 12 | 12 | 13 | 12 | 14 | 12 | 12 | 12 | 11 |
| | Open-cell ratio | % | 1.5 | 1.2 | 1.8 | 1.7 | 1.4 | 1.1 | 1.2 | 3.5 | 6.0 | 1.6 | 4.9 | 1.2 | 1.2 |
| Two-step foaming conditions | Foamed particle internal pressure (absolute pressure) | MPa | 0.26 | 0.26 | 0.26 | 0.26 | 0.26 | 0.35 | 0.35 | 0.26 | 0.20 | 0.24 | 0.26 | 0.26 | 0.35 |
| | Vapor pressure (gauge pressure) | MPa | 0.07 | 0.09 | 0.05 | 0.06 | 0.05 | 0.07 | 0.07 | 0.06 | 0.04 | 0.07 | 0.10 | 0.08 | 0.08 |
| Two-step foamed particles | Average bubble size | mm | 0.14 | 0.07 | 0.11 | 0.12 | 0.14 | 0.08 | 0.08 | 0.09 | 0.13 | 0.15 | 0.11 | 0.13 | 0.19 |
| | Bulk density | g/L | 31 | 31 | 30 | 30 | 30 | 30 | 30 | 30 | 30 | 30 | 31 | 30 | 30 |
| | DSC ratio | % | 12 | 12 | 12 | 13 | 12 | 12 | 13 | 12 | 14 | 12 | 12 | 12 | 11 |
| | Open-cell ratio | % | 1.6 | 1.3 | 1.9 | 1.9 | 1.5 | 1.1 | 1.3 | 4.2 | 6.5 | 2.2 | 5.3 | 1.3 | 1.4 |
| Molding conditions | Foamed particle internal pressure (absolute pressure) | MPa | 0.20 | 0.20 | 0.20 | 0.20 | 0.20 | 0.20 | 0.20 | 0.20 | 0.20 | 0.20 | 0.20 | 0.20 | 0.20 |
| | Vapor pressure (gauge pressure) | MPa | 0.30 | 0.30 | 0.30 | 0.30 | 0.30 | 0.30 | 0.30 | 0.30 | 0.30 | 0.30 | 0.30 | 0.30 | 0.30 |
| Polypropylene in-mold foam molded article | Molded article density | g/L | 31 | 31 | 30 | 30 | 30 | 30 | 30 | 30 | 30 | 30 | 31 | 31 | 30 |
| | DSC ratio | % | 11 | 11 | 11 | 12 | 11 | 11 | 12 | 11 | 14 | 12 | 10 | 11 | 11 |
| | Fusion properties | - | ○○ | ○○ | ○ | ○○ | ○ | ○○ | ○○ | △ | ○ | ○ | ○ | ○ | ○ |
| | Surface nature | - | ○ | ○ | ○ | ○ | ○ | ○ | ○ | △ | × | △ | △ | ○ | ○ |
| | Dimensional accuracy | - | ○ | ○ | ○ | ○ | ○ | × | ○ | ○ | × | × | △ | × | ○ |
| | Compressive strength | MPa | 0.228 | 0.228 | 0.226 | 0.225 | 0.227 | 0.228 | 0.227 | 0.118 | 0.115 | 0.226 | 0.116 | 0.227 | 0.228 |
| | Electric conductivity | - | ◎ | ○ | ◎ | ◎ | ◎ | × | ○ | ○ | ○ | × | × | × | ○ |
| | Flame retardancy | - | ○ | ○ | ○ | ○ | ○ | × | × | ○ | ○ | × | × | ○ | × |

(*) 12.9 × 10⁴ nm²
(Note 1) "NOR116" manufactured by Ciba Specialty Chemicals
(Note 2) "PX200" manufactured by DAIHACHI Chemical Industry Co., Ltd.
(+) Reference Example

Industrial Applicability

The polypropylene resin in-mold foam molded article of the present invention has excellent electric conductivity and flame retardancy and thus can be suitably used for cushioning materials for electronic devices and precision apparatuses, a parts tray of a robotized line, and radio wave absorbers used for suppressing radiation noises or radio reflection of anechoic chambers and electronic devices, for example.

**Claims**

1. Polypropylene resin foamed particles produced by a method comprising a one-step foaming process including placing polypropylene resin particles, water, and a foaming agent in a pressure-resistant container, the foaming agent including an inorganic physical foaming agent including carbon dioxide, dispersing the contents in the pressure-resistant container under stirring and increasing the temperature of the contents to a temperature equal to or higher than the temperature 20°C lower than a melting point of the polypropylene resin particles and equal to or lower than the temperature 10°C higher than the melting point of the polypropylene resin particles, and then discharging the dispersion liquid in the pressure-resistant container into an area having a pressure lower than an internal pressure of the pressure-resistant container to foam the polypropylene resin particles, wherein the melting point of the polypropylene resin is a value determined through calorimetric measurement by differential scanning calorimetry as disclosed in the specification,
the polypropylene resin particles including a polypropylene resin composition containing 11 parts by weight or more and 25 parts by weight or less of an electroconductive carbon black having a DBP absorption amount of 300 cm³/100 g or more and 600 cm³/100 g or less, 3 parts by weight or more and 15 parts by weight or less of melamine cyanurate, and 0.01 parts by weight or more and 10 parts by weight or less of a bubble size enlarging agent, respectively relative to 100 parts by weight of the polypropylene resin, wherein the bubble size enlarging agent is a compound that is present as a liquid at 150°C under normal pressure, has a hydroxy group and is contained in the polypropylene resin in a liquid state at a foaming temperature, wherein the DBP absorption amount is a value determined in accordance with JIS K6217-4: 2008.

2. The polypropylene resin foamed particles according to claim 1, wherein the bubble size enlarging agent is polyethylene glycol.

3. The polypropylene resin foamed particles according to claim 1 or 2, wherein the foamed particles have an average bubble size of 0.05 mm or more and less than 0.17 mm.

4. The polypropylene resin foamed particles according to any one of claims 1 to 3, wherein the foamed particles have a bulk density of 20 g/L or more and 40 g/L or less.

5. The polypropylene resin foamed particles according to any one of claims 1 to 4, wherein the foamed particles have an open-cell ratio of 3.0% or less.

6. The polypropylene resin foamed particles according to any one of claims 1 to 5, wherein the foamed particles have two melting peaks in measurement by differential scanning calorimetry, and a ratio of the melting peak at a high temperature side, $\{Qh/(Ql + Qh)\} \times 100$, calculated from a heat quantity $Ql$ of the melting peak at a low temperature side and a heat quantity $Qh$ of the melting peak at the high temperature side is 6% or more and 20% or less.

7. A polypropylene resin in-mold foam molded article produced from the polypropylene resin foamed particles according to any one of claims 1 to 6, the polypropylene resin in-mold foam molded article having a volume resistivity value of 10Ω•cm or more and 5,000Ω•cm or less.

8. The polypropylene resin in-mold foam molded article according to claim 7, wherein the molded article passes UL94 HBF flammability test.

9. The polypropylene resin in-mold foam molded article according to claim 7 or 8, wherein the molded article has a molded article density of 20 g/L or more and 40 g/L or less.

10. The polypropylene resin in-mold foam molded article according to any one of claims 7 to 9, wherein the molded article has two melting peaks in measurement by differential scanning calorimetry, and a ratio of the melting peak at a high temperature side, $\{qh/(ql + qh)\} \times 100$, calculated from a heat quantity $ql$ of the melting peak at a low temperature side and a heat quantity $qh$ of the melting peak at the high temperature side is 6% or more and 20% or less.

11. A method for producing polypropylene resin foamed particles, the method comprising a one-step foaming process including placing polypropylene resin particles, water, and a foaming agent in a pressure-resistant container, the foaming agent including an inorganic physical foaming agent including carbon dioxide, dispersing the contents in the pressure-resistant container under stirring and increasing a temperature of the contents to a temperature equal to or higher than the temperature 20°C lower than a melting point of the polypropylene resin particles and equal to or lower than the temperature 10°C higher than the melting point of the polypropylene resin particles, and then discharging the dispersion liquid in the pressure-resistant container into an area having a pressure lower than an internal pressure of the pressure-resistant container to foam the polypropylene resin particles, wherein the melting point of the polypropylene resin is a value determined through calorimetric measurement by differential scanning calorimetry as disclosed in the specification,

the polypropylene resin particles including a polypropylene resin composition that contains 11 parts by weight or more and 25 parts by weight or less of an electroconductive carbon black having a DBP absorption amount of 300 $cm^3/100$ g or more and 600 $cm^3/100$ g or less, 3 parts by weight or more and 15 parts by weight or less of melamine cyanurate, and 0.01 parts by weight or more and 10 parts by weight or less of a bubble size enlarging agent, respectively relative to 100 parts by weight of the polypropylene resin, wherein the bubble size enlarging agent is a compound that is present as a liquid at 150°C under normal pressure, has a hydroxy group and is contained in the polypropylene resin in a liquid state at a foaming temperature, wherein the DBP absorption amount is a value determined in accordance with JIS K6217-4: 2008.

**12.** The method for producing polypropylene resin foamed particles according to claim 11, wherein the bubble size enlarging agent is polyethylene glycol.

**Patentansprüche**

**1.** Polypropylenharz-Schaumpartikel, hergestellt durch ein Verfahren, umfassend ein einstufiges Schäumverfahren, welches Platzieren von Polypropylenharzteilchen, Wasser und eines Schaumbildners in einen druckfesten Behälter, wobei der Schaumbildner einen anorganischen physikalischen Schaumbildner einschließlich Kohlendioxid enthält, Dispergieren der Inhalte in den druckfesten Behälter unter Rühren und Erhöhen der Temperatur der Inhalte auf eine Temperatur gleich oder höher als die Temperatur 20°C niedriger als ein Schmelzpunkt der Polypropylenharzteilchen und gleich oder niedriger als die Temperatur 10°C höher als der Schmelzpunkt der Polypropylenharzteilchen, und dann Abgeben der Dispersionsflüssigkeit in den druckfesten Behälter in einem Bereich mit einem Druck niedriger als ein innerer Druck des druckfesten Behälters, um die Polypropylenharzteilchen zu schäumen, beinhaltet, wobei der Schmelzpunkt des Polypropylenharzes ein Wert ist, der durch kalorimetrische Messung mithilfe der Differentialscanningkalorimetrie, wie in der Beschreibung offenbart, bestimmt wird, wobei die Polypropylenharzteilchen eine Polypropylenharzzusammensetzung umfassen, die 11 Gewichtsteile oder mehr und 25 Gewichtsteile oder weniger eines elektrisch leitenden Rußes mit einer DBP-Absorptionsmenge von 300 $cm^3/100$ g oder mehr und 600 $cm^3/100$ g oder weniger, 3 Gewichtsteile oder mehr und 15 Gewichtsteile oder weniger an Melamincyanurat und 0,01 Gewichtsteile oder mehr und 10 Gewichtsteile oder weniger eines Mittels zur Vergrößerung der Blasengröße, jeweils bezogen auf 100 Gewichtsteile des Polypropylenharzes, enthält, wobei das Mittel zur Vergrößerung der Blasengröße eine Verbindung ist, die bei 150°C unter normalem Druck als eine Flüssigkeit vorliegt, eine Hydroxygruppe aufweist und in dem Polypropylenharz in einem flüssigen Zustand bei einer Schäumtemperatur enthalten ist, wobei die DBP-Absorptionsmenge ein gemäß JIS K6217-4: 2008 ermittelter Wert ist.

**2.** Die Polypropylenharz-Schaumpartikel nach Anspruch 1, wobei das Mittel zur Vergrößerung der Blasengröße Polyethylenglykol ist.

**3.** Die Polypropylenharz-Schaumpartikel nach Anspruch 1 oder 2, wobei die Schaumpartikel eine durchschnittliche Blasengröße von 0,05 mm oder mehr und weniger als 0,17 mm aufweisen.

**4.** Die Polypropylenharz-Schaumpartikel nach einem der Ansprüche 1 bis 3, wobei die Schaumpartikel eine Schüttdichte von 20 g/l oder mehr und 40 g/l oder weniger aufweisen.

**5.** Die Polypropylenharz-Schaumpartikel nach einem der Ansprüche 1 bis 4, wobei die Schaumpartikel ein offene-Zelle-Verhältnis von 3,0% oder weniger aufweisen.

**6.** Die Polypropylenharz-Schaumpartikel nach einem der Ansprüche 1 bis 5, wobei die Schaumpartikel zwei Schmelzpeaks bei einer Messung durch Differentialscanningkalorimetrie aufweisen, und ein Verhältnis des Schmelzpeaks an einer Hochtemperaturseite, {Qh/(Ql + Qh)} x 100, berechnet anhand einer Wärmemenge Q1 des Schmelzpeaks an einer Niedrigtemperaturseite und einer Wärmemenge Qh des Schmelzpeaks an der Hochtemperaturseite, 6% oder mehr und 20% oder weniger beträgt.

7. Ein in einer Form geschäumter Polypropylenharz-Formkörper, hergestellt aus den Polypropylenharz-Schaumpartikeln nach einem der Ansprüche 1 bis 6, wobei der in einer Form geschäumte Polypropylenharz-Formkörper einen Volumenwiderstandswert von 10Ω•cm oder mehr und 5.000Ω•cm oder weniger aufweist.

8. Der in einer Form geschäumte Polypropylenharz-Formkörper nach Anspruch 7, wobei der Formkörper den UL94 HBF-Entflammbarkeitstest besteht.

9. Der in einer Form geschäumte Polypropylenharz-Formkörper nach Anspruch 7 oder 8, wobei der Formkörper eine Formkörperdichte von 20 g/l oder mehr und 40 g/l oder weniger aufweist.

10. Der in einer Form geschäumte Polypropylenharz-Formkörper nach einem der Ansprüche 7 bis 9, wobei der Formkörper zwei Schmelzpeaks bei der Messung durch Differentialscanningkalorimetrie aufweist und ein Verhältnis des Schmelzpeaks an einer Hochtemperaturseite {qh/(ql + qh)} x 100, berechnet anhand einer Wärmemenge ql des Schmelzpeaks an einer Niedertemperaturseite und einer Wärmemenge qh des Schmelzpeaks an der Hochtemperaturseite, 6% oder mehr und 20% oder weniger beträgt.

11. Ein Verfahren zur Herstellung von Polypropylenharz-Schaumpartikeln, wobei das Verfahren ein einstufiges Schäumverfahren umfasst, welches Platzieren von Polypropylenharzteilchen, Wasser und eines Schaumbildners in einen druckfesten Behälter, wobei der Schaumbildner einen anorganischen physikalischen Schaumbildner einschließlich Kohlendioxid enthält, Dispergieren der Inhalte in den druckfesten Behälter unter Rühren und Erhöhen einer Temperatur der Inhalte auf eine Temperatur gleich oder höher als die Temperatur 20°C niedriger als ein Schmelzpunkt der Polypropylenharzteilchen ist und gleich oder niedriger als die Temperatur 10°C höher als der Schmelzpunkt der Polypropylenharzteilchen, und dann Abgeben der Dispersionsflüssigkeit in den druckfesten Behälter in einem Bereich mit einem Druck niedriger als ein innerer Druck des druckfesten Behälters, um die Polypropylenharzteilchen zu schäumen, beinhaltet, wobei der Schmelzpunkt des Polypropylenharzes ein Wert ist, der durch kalorimetrische Messung mithilfe der Differentialscanningkalorimetrie, wie in der Beschreibung offenbart, bestimmt wird,
wobei die Polypropylenharzteilchen eine Polypropylenharzzusammensetzung umfassen, die 11 Gewichtsteile oder mehr und 25 Gewichtsteile oder weniger eines elektrisch leitenden Rußes mit einer DBP-Absorptionsmenge von 300 cm$^3$/100 g oder mehr und 600 cm$^3$/100 g oder weniger, 3 Gewichtsteile oder mehr und 15 Gewichtsteile oder weniger an Melamincyanurat und 0,01 Gewichtsteile oder mehr und 10 Gewichtsteile oder weniger eines Mittels zur Vergrößerung der Blasengröße, jeweils bezogen auf 100 Gewichtsteile des Polypropylenharzes, enthält, wobei das Mittel zur Vergrößerung der Blasengröße eine Verbindung ist, die bei 150°C unter normalem Druck als eine Flüssigkeit vorliegt, eine Hydroxygruppe aufweist und in dem Polypropylenharz in einem flüssigen Zustand bei einer Schäumtemperatur enthalten ist, wobei die DBP-Absorptionsmenge ein gemäß JIS K6217-4: 2008 ermittelter Wert ist.

12. Das Verfahren zur Herstellung von Polypropylenharz-Schaumpartikeln nach Anspruch 11, wobei das Mittel zur Vergrößerung der Blasengröße Polyethylenglykol ist.

**Revendications**

1. Particules expansées en résine de polypropylène produites par une méthode comprenant un procédé de moussage en une seule étape comprenant le placement de particules de résine de polypropylène, d'eau, et d'un agent moussant dans un récipient résistant à la pression, l'agent moussant contenant un agent moussant physique inorganique contenant du dioxyde de carbone, la dispersion du contenu dans le récipient résistant à la pression sous agitation, et l'augmentation de la température du contenu jusqu'à une température supérieure ou égale à une température inférieure de 20 °C au point de fusion des particules de résine de polypropylène et égale ou inférieure à une température supérieure de 10 °C au point de fusion des particules de résine de polypropylène, et ensuite la décharge du liquide en dispersion se trouvant dans le récipient résistant à la pression dans une zone ayant une pression inférieure à la pression interne du récipient résistant à la pression pour que les particules de résine de polypropylène moussent, dans lesquelles le point de fusion de la résine de polypropylène est une valeur déterminée par mesure calorimétrique au moyen d'une calorimétrie à balayage différentiel comme divulgué dans la description, les particules de résine de polypropylène contenant une composition de résine de polypropylène contenant 11 parties en poids ou plus et 25 parties en poids ou moins d'un noir de carbone électriquement conducteur ayant une quantité d'absorption de DBP de 300 $cm^3$/100 g ou plus et de 600 $cm^3$/100 g ou moins, 3 parties en poids ou plus et 15 parties en poids ou moins de cyanurate de mélamine, et 0,01 partie en poids ou plus et 10 parties en poids ou moins d'un agent augmentant la taille des bulles, respectivement pour 100 parties en poids de la résine de polypropylène, dans lesquelles l'agent augmentant la taille des bulles est un composé qui est présent sous forme liquide à 150 °C sous la pression normale, qui a un groupe hydroxy et qui est contenu dans la résine de polypropylène à l'état liquide à la température de moussage, et dans lesquelles la quantité d'absorption de DBP est une valeur déterminée conformément à la norme JIS K6217-4:2008.

2. Particules expansées en résine de polypropylène selon la revendication 1, dans lesquelles l'agent augmentant la taille des bulles est le polyéthylèneglycol.

3. Particules expansées en résine de polypropylène selon la revendication 1 ou 2, dans lesquelles les particules expansées ont une taille de bulle moyenne de 0,05 mm ou plus et inférieure à 0,17 mm.

4. Particules expansées en résine de polypropylène selon l'une quelconque des revendications 1 à 3, dans lesquelles les particules expansées ont une masse volumique apparente de 20 g/l ou plus et de 40 g/l ou moins.

5. Particules expansées en résine de polypropylène selon l'une quelconque des revendications 1 à 4, dans lesquelles les particules expansées ont une proportion de cellules ouvertes de 3,0 % ou moins.

6. Particules expansées en résine de polypropylène selon l'une quelconque des revendications 1 à 5, dans lesquelles les particules expansées ont deux pics de fusion dans une mesure par calorimétrie à balayage différentiel, et la proportion du pic de fusion du côté des températures élevées, {Qh/(Ql + Qh)} x 100, calculée à partir de la quantité de chaleur Ql du pic de fusion du côté des basses températures et de la quantité de chaleur Qh du pic de fusion du côté des températures élevées, est de 6 % ou plus et de 20 % ou moins.

7. Article en résine de polypropylène moulé par expansion dans un moule produit à partir des particules expansées en résine de polypropylène selon l'une quelconque des revendications 1 à 6, l'article moulé en mousse dans un moule en résine de polypropylène ayant une valeur de résistivité volumique de 10 Ω•cm ou plus et de 5000 Ω•cm ou moins.

8. Article en résine de polypropylène moulé par expansion dans un moule selon la revendication 7, dans lequel l'article moulé passe le test d'inflammabilité UL94 HBF.

9. Article en résine de polypropylène moulé par expansion dans un moule selon la revendication 7 ou 8, dans lequel l'article moulé a une masse volumique d'article moulé de 20 g/l ou plus et de 40 g/l ou moins.

10. Article en résine de polypropylène moulé par expansion dans un moule selon l'une quelconque des revendications 7 à 9, dans lequel l'article moulé a deux pics de fusion dans une mesure par calorimétrie à balayage différentiel, et dans lequel la proportion du pic de fusion du côté des températures élevées, {qh/(ql + qh)} x 100, calculée à partir de la quantité de chaleur ql du pic de fusion du côté des basses températures et de la quantité de chaleur qh du pic de fusion du côté des températures élevées, est de 6 % ou plus et de 20 % ou moins.

11. Méthode de production de particules expansées en résine de polypropylène, la méthode comprenant un procédé de moussage en une seule étape comprenant le placement de particules de résine de polypropylène, d'eau, et d'un agent moussant dans un récipient résistant à la pression, l'agent moussant contenant un agent moussant physique inorganique contenant du dioxyde de carbone, la dispersion du contenu dans le récipient résistant à la pression sous agitation, et l'augmentation de la température du contenu jusqu'à une température supérieure ou égale à une température inférieure de 20 °C au point de fusion des particules de résine de polypropylène et égale ou inférieure à une température supérieure de 10 °C au point de fusion des particules de résine de polypropylène, et ensuite la décharge du liquide en dispersion se trouvant dans le récipient résistant à la pression dans une zone ayant une pression inférieure à la pression interne du récipient résistant à la pression pour que les particules de résine de polypropylène moussent, dans laquelle le point de fusion de la résine de polypropylène est une valeur déterminée par mesure calorimétrique au moyen d'une calorimétrie à balayage différentiel comme divulgué dans la description, les particules de résine de polypropylène contenant une composition de résine de polypropylène contenant 11 parties en poids ou plus et 25 parties en poids ou moins d'un noir de carbone électriquement conducteur ayant une quantité d'absorption de DBP de 300 $cm^3$/100 g ou plus et de 600 $cm^3$/100 g ou moins, 3 parties en poids ou plus et 15 parties en poids ou moins de cyanurate de mélamine, et 0,01 partie en poids ou plus et 10 parties en poids ou moins d'un agent augmentant la taille des bulles, respectivement pour 100 parties en poids de la résine de polypropylène, dans laquelle l'agent augmentant la taille des bulles est un composé qui est présent sous forme liquide à 150 °C sous la pression normale, qui a un groupe hydroxy et qui est contenu dans la résine de polypropylène à l'état liquide à la température de moussage, et dans laquelle la quantité d'absorption de DBP est une valeur déterminée conformément à la norme JIS K6217-4:2008.

12. Méthode pour produire des particules expansées en résine de polypropylène selon la revendication 11, dans laquelle l'agent augmentant la taille des bulles est le polyéthylèneglycol.

[Fig. 1]

[Fig. 2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07300536 A
- JP H09202837 A
- JP 2000169619 A
- JP 2004175819 A
- JP 2003229691 A
- JP 2004319603 A
- JP 2004263033 A
- JP 2010209145 A
- JP 2010270243 A
- JP H10251436 A
- JP 2005264005 A